# EUROPÄISCHE PATENTANMELDUNG

(11) **EP 4 474 190 A1**
(43) Date of publication of application: **11.12.2024**
(21) Application number: 22924949.5
(22) Date of filing: 10.11.2022
(51) Int. Cl.: B60K 11/02, H02M 7/48, H02K 9/19

(54) **ELECTRIC WORK VEHICLE**

(30) Priority: 02.02.2022 JP 2022015010
(71) Applicant: Kubota Corporation, Osaka 556-8601 (JP)
(72) Inventor: OKAZAKI Kazuto, Sakai-shi, Osaka 590-0908 (JP); KAWABATA Shinichi, Sakai-shi, Osaka 590-0908 (JP); MATSUMOTO Ryunosuke, Sakai-shi, Osaka 590-0908 (JP); MITSUI Kenji, Sakai-shi, Osaka 590-0908 (JP); MIZOGUCHI Yoshiki, Sakai-shi, Osaka 590-0908 (JP)
(74) Representative: Müller-Boré & Partner Patentanwälte PartG mbB
(86) International application number: PCT/JP2022/041822
(87) International publication number: WO 2023/149044

(57) **Abstract**

The present invention includes a body, a travel device on the body, a motor M configured to drive the travel device, an inverter 14 configured to supply electric power to the motor M, a radiator 23 configured to cool a coolant, and a cooling path 26 through which the coolant cooled by the radiator 23 circulates through a plurality of cooling targets including the motor M and returns to the radiator 23. The motor M is cooled in a region downstream of the other cooling targets in the cooling path 26.

## Description

### Technical Field

The present invention relates to an electric work vehicle in which a travel device is driven by a motor.

### Background Art

As disclosed in Patent Document 1, there is an electric work vehicle (electric work machine) in which a travel device is driven by a motor (electric motor). The electric work vehicle includes a battery for travel, an inverter, and the like for driving the motor, and further includes a DC/DC converter for converting the voltage of power to be supplied to various auxiliary devices.

The electric work vehicle also includes a radiator and a cooling path for cooling the motor, the inverter, the DC/DC converter, and the like. The cooling path is a path through which a coolant cooled by the radiator is circulated through the motor, the inverter, the DC/DC converter, and the like, and then returned to the radiator.

### Prior Art Document

### Patent Document

Patent Document 1: JP 2021-80709A

### Disclosure of the Invention

### Problem to be Solved by the Invention

However, there is demand for more efficient cooling of cooling targets such as the motor, the inverter, and the DC/DC converter in order to stabilize the performance of the cooling targets.

An object of the present invention is to efficiently cool the cooling targets.

### Means for Solving Problem

In order to achieve the above object, an electric work vehicle according to an aspect of the present invention includes: a body; a travel device on the body; a motor configured to drive the travel device; a radiator configured to cool a coolant; and a cooling path through which the coolant cooled by the radiator circulates through a plurality of cooling targets including the motor and returns to the radiator, the motor being cooled in a region downstream of each other cooling target in the cooling path.

The motor generates a large amount of heat during operation. Therefore, after the coolant cools the motor through heat exchange with the motor, the temperature of the coolant rises significantly, and the cooling performance of the coolant decreases. A cooling target may not be sufficiently cooled by the coolant if the cooling performance of the coolant has decreased.

According to the above configuration, the motor, which generates a large amount of heat during operation, is cooled last in the cooling path. As a result, the cooling targets other than the motor can be cooled with the coolant that has maintained sufficient cooling performance, and the cooling targets other than the motor can be efficiently cooled. Since the motor generates a large amount of heat during operation, the motor can be sufficiently cooled even if the temperature of the coolant has somewhat risen after cooling the other cooling targets.

In another aspect, the electric work vehicle may further include: an inverter configured to supply electric power to the motor; and a DC/DC converter configured to convert a voltage of electric power to be supplied to an electric component, and the inverter and the DC/DC converter may be included in the plurality of cooling targets.

According to this configuration, the coolant flowing through the cooling path can efficiently cool the inverter and the DC/DC converter.

In another aspect, the cooling path may extend from the radiator, pass through the inverter, the DC/DC converter, and the motor in this order, and return to the radiator.

As described above, the motor generates a large amount of heat during operation. Also, although the inverter generates less heat than the motor, the inverter generally has lower heat resistance than the motor and is therefore more greatly influenced by heat. Furthermore, the DC/DC converter generates a small amount of heat and thus requires less cooling than the motor and inverter.

According to the above configuration, the coolant cools the inverter and the DC/DC converter before cooling the motor, and thus the inverter and the DC/DC converter are appropriately cooled. Note that since the amount of heat generated by the DC/DC converter is smaller than that generated by the inverter, and furthermore the heat resistance of the DC/DC converter is greater than that of the inverter, the DC/DC converter can be sufficiently cooled by the coolant that has already cooled the inverter. Therefore, the coolant can sufficiently cool the motor, the inverter, and the DC/DC converter.

In another aspect, the radiator, the inverter, and the motor may be arranged in this order in a front-rear direction of the body from a front side corresponding to a forward travel direction of the body.

According to this configuration, the inverter and motor are arranged in this order (the order of cooling by the coolant) behind the radiator, and thus the cooling path can be configured efficiently, and the cooling targets can be cooled efficiently.

In another aspect, the electric work vehicle may further include: a battery for travel configured to store electric power to be supplied to the motor via the inverter, the inverter may be under the battery for travel, and the inverter may overlap the battery for travel in a plan view.

According to this configuration, the inverter and the battery for travel can be arranged efficiently.

### Brief Description of the Drawings

FIG. 1 is a left side view of a tractor.
FIG. 2 is a front view of the tractor.
FIG. 3 is a left side view illustrating the arrangement of an inverter and the like.
FIG. 4 is a diagram showing a flow of power transmission.
FIG. 5 is a plan view illustrating a schematic configuration of a cooling path.
FIG. 6 is a front view illustrating an example of a main portion of a motor arrangement configuration.
FIG. 7 is a perspective view illustrating a schematic configuration of a motor coolant flow path.
FIG. 8 is a plan view illustrating a configuration of a main portion of the inverter.
FIG. 9 is a left side cross-sectional view showing a main portion of a cross section taken along line IX-IX in FIG. 8.
FIG. 10 is a bottom view illustrating a configuration of an IGBT.
FIG. 11 is a left side cross-sectional view showing a main portion of a cross section taken along line XI-XI in FIG. 8.
FIG. 12 is a plan view illustrating a schematic configuration of a cooling path in another embodiment.

### Best Mode for Carrying out the Invention

Embodiments of the present invention will be described below based on the drawings. In the following description, unless otherwise stated, "front" and "rear" refer to respectively the direction of an arrow F and the direction of an arrow B in the drawings, "upper" and "lower" refer to respectively the direction of an arrow U and the direction of an arrow D in the drawings, and "left" and "right" refer to respectively the direction of an arrow L and the direction of an arrow R in the drawings.

### Overall Configuration of Tractor

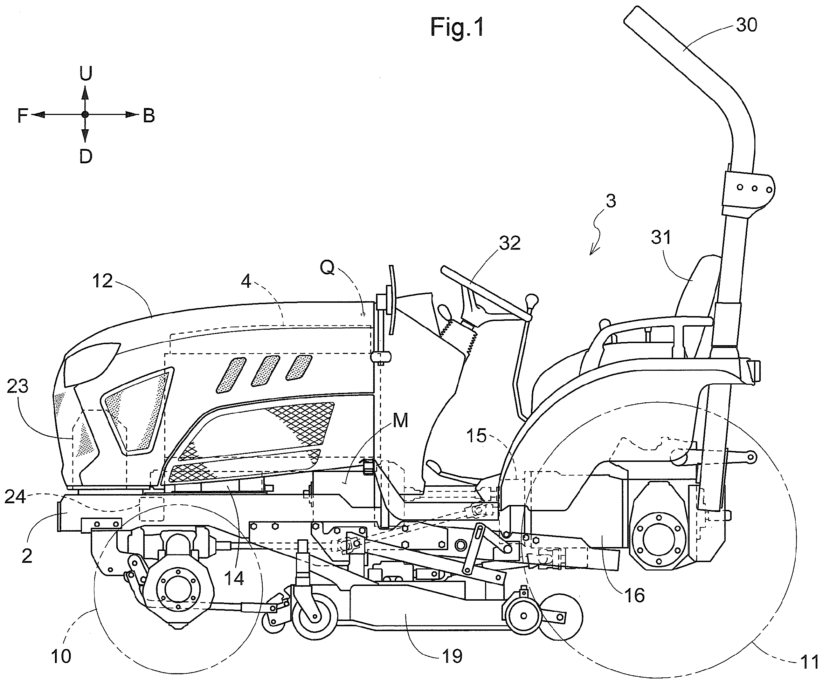

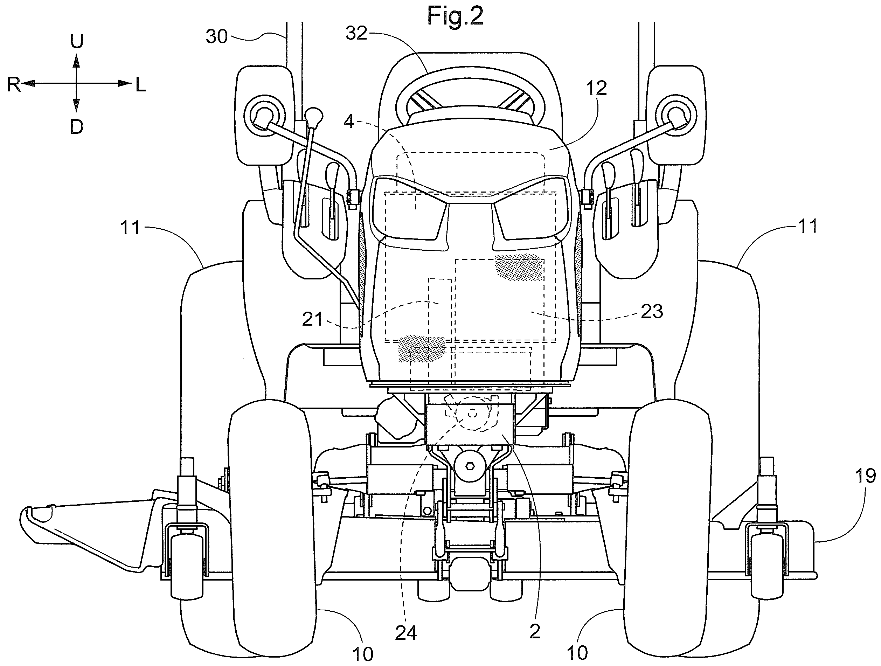

The following describes an electric tractor (hereinafter simply referred to as a "tractor") as an example of an electric work vehicle. As shown in FIGS. 1 and 2, the tractor includes left and right front wheels 10, left and right rear wheels 11, and a cover member 12.

The tractor also includes a body frame 2 and a driving section 3. The body frame 2 is supported by the left and right front wheels 10 and the left and right rear wheels 11.

The cover member 12 is disposed in a front portion of the body of the tractor. The driving section 3 is behind the cover member 12. In other words, the cover member 12 is in front of the driving section 3.

The driving section 3 includes a protective frame 30, a driver's seat 31, and a steering wheel 32. An operator can sit on the driver's seat 31. The operator can thus ride in the driving section 3. The left and right front wheels 10 are steered by operating the steering wheel 32. The operator can perform various driving operations in the driving section 3.

The tractor includes a battery 4 for travel. The cover member 12 is configured to be pivotable about an opening/closing axis Q extending in the left-right direction of the body. The cover member 12 can thus be opened and closed. While the cover member 12 is closed, the battery 4 for travel is covered by the cover member 12.

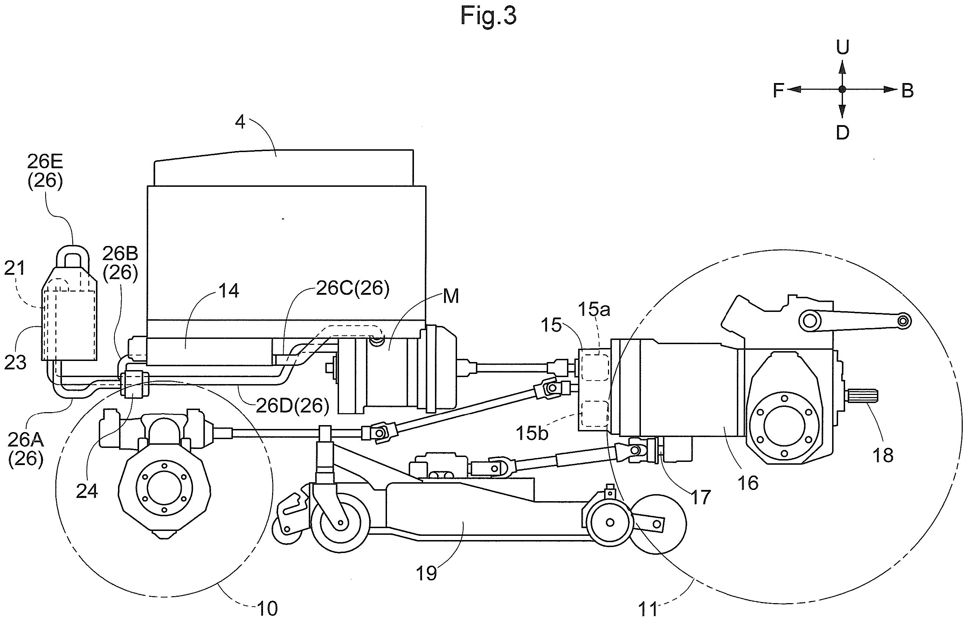

As shown in FIGS. 2 and 3, the tractor includes an inverter 14 and a motor M. The battery 4 for travel supplies electric power to the inverter 14. The inverter 14 converts DC power supplied from the battery 4 for travel into AC power (a three-phase alternating current), and supplies the AC power to the motor M. The motor M is driven by the AC power supplied from the inverter 14.

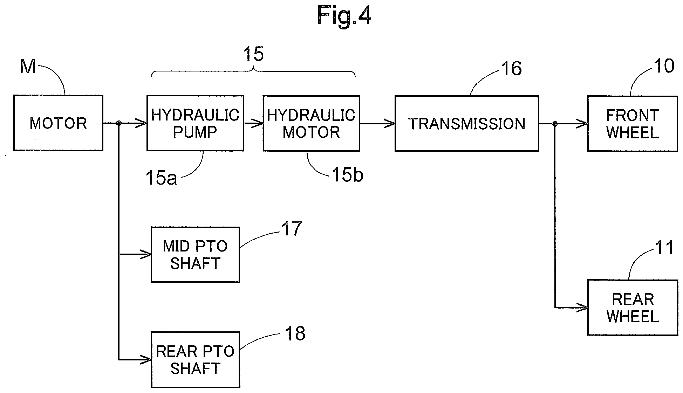

As shown in FIGS. 3 and 4, the tractor includes a hydraulic continuously variable transmission 15 and a transmission 16. As shown in FIG. 4, the hydraulic continuously variable transmission 15 includes a hydraulic pump 15a and a hydraulic motor 15b.

The hydraulic pump 15a is driven by rotational motive power transmitted from the motor M. As a result of the hydraulic pump 15a being driven, rotational motive power is output from the hydraulic motor 15b. The hydraulic continuously variable transmission 15 changes the speed of rotational motive power between the hydraulic pump 15a and the hydraulic motor 15b. Also, the hydraulic continuously variable transmission 15 is configured to be capable of changing the transmission ratio in a stepless manner.

The rotational motive power output from the hydraulic motor 15b is transmitted to the transmission 16. The speed of the rotational motive power transmitted to the transmission 16 is changed by a gear transmission mechanism included in the transmission 16, and the rotational motive power is distributed to the left and right front wheels 10 and the left and right rear wheels 11. Thus, the left and right front wheels 10 and the left and right rear wheels 11 are driven.

As shown in FIGS. 3 and 4, the tractor also includes a middle PTO shaft 17 and a rear PTO shaft 18. Rotational motive power output from the motor M is distributed to the hydraulic pump 15a, the middle PTO shaft 17, and the rear PTO shaft 18. The middle PTO shaft 17 and the rear PTO shaft 18 are rotated by the distributed rotational motive power.

If a work device is connected to the middle PTO shaft 17 or the rear PTO shaft 18, the work device is driven by rotational motive power transmitted by the middle PTO shaft 17 or the rear PTO shaft 18. For example, in the present embodiment, a grass cutting device 19 is connected to the middle PTO shaft 17 as shown in FIG. 3. The grass cutting device 19 is driven by rotational motive power transmitted by the middle PTO shaft 17.

### Cooling Mechanism

As described above, the inverter 14 converts the current supplied from the battery 4 for travel to a three-phase alternating current (three-phase current) having a predetermined frequency, and supplies the three-phase alternating current to the motor M. The motor M is driven in accordance with the frequency of the supplied three-phase alternating current.

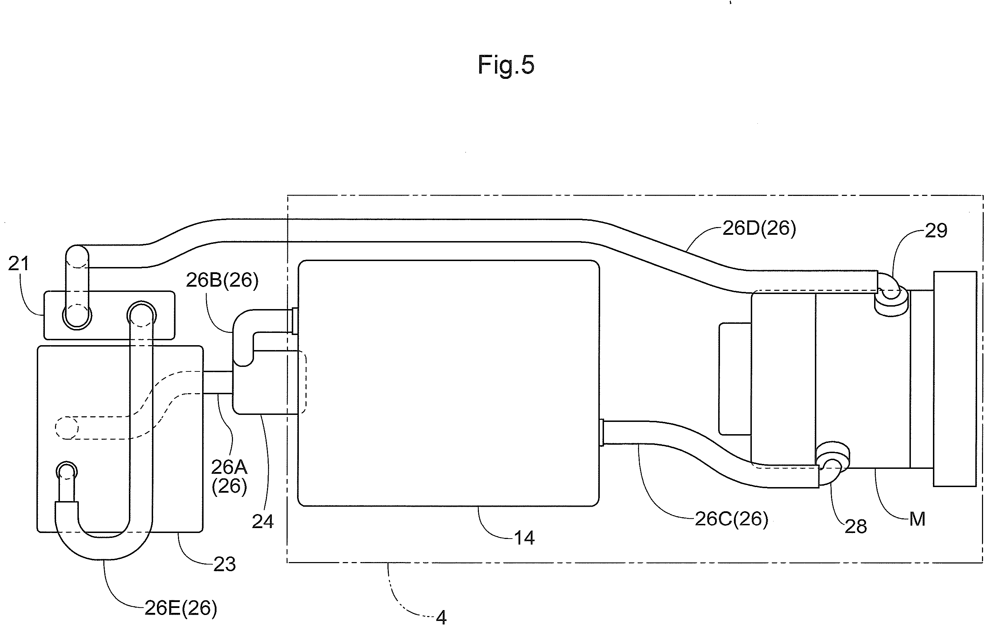

The inverter 14 and the motor M generate heat while operating. Therefore, in order to suppress malfunction due to heat, the inverter 14 and the motor M are cooled during operation. The following describes a cooling mechanism of the tractor with reference to FIGS. 3 and 5.

Here, in addition to the inverter 14 and the motor M, the tractor includes a DC/DC converter 21 as a device that generates heat while operating. The DC/DC converter 21 supplies electric power to various auxiliary devices (electric components) included in the tractor. The DC/DC converter 21 reduces (converts) the voltage of electric power supplied from the battery 4 for travel to voltages corresponding to the auxiliary devices and supplies the power to the auxiliary devices.

The cooling mechanism for cooling the inverter 14, the motor M, and the DC/DC converter 21, which are cooling targets, includes a radiator 23, an electric pump 24, and a cooling path 26.

The radiator 23 cools a coolant that cools the inverter 14, the motor M, and the DC/DC converter 21. The radiator 23 cools the coolant with air that passes through the radiator 23 from the front side of the body. The coolant cools the hot cooling targets through heat transfer between the coolant and the cooling targets.

The cooling path 26 is a path through which the coolant flows from the radiator 23 through the cooling targets and returns to the radiator 23. The cooling path 26 is a hollow pipe member having a suitable cross-sectional shape, and the coolant flows through the internal space of the cooling path 26.

The electric pump 24 suctions the cooled coolant from the radiator 23 and pumps the coolant through the cooling path 26. Note that the coolant may be cooling water, an anti-freeze solution, a cooling gas, or the like, and is only required to be capable of flowing through the cooling path 26 and appropriately exchanging heat with the cooling targets.

Specifically, the radiator 23 is slightly eccentric leftward in a center region in the left-right direction of the body in the front portion of the body. The DC/DC converter 21 is next to the radiator 23 in the left-right direction on the right side of the radiator 23. The radiator 23 and the DC/DC converter 21 are disposed in the front portion of the body, and this facilitates the passage of air from the front side of the body.

The electric pump 24 is disposed below and behind the radiator 23 near the center region of the body in the left-right direction.

The inverter 14 is disposed behind the radiator 23 near the center region of the body in the left-right direction. Also, the inverter 14 is under the battery 4 for travel and overlaps the battery 4 for travel in a plan view. For example, the inverter 14 is located within a region where the battery 4 for travel is disposed, in the plan view.

The motor M is disposed behind the inverter 14 near the center region of the body in the left-right direction. Also, the motor M is under the battery 4 for travel and overlaps the battery 4 for travel in a plan view. For example, the motor M is within the region where the battery 4 for travel is disposed, in the plan view.

The electric pump 24 suctions the coolant cooled by the radiator 23 from the radiator 23 via a cooling path 26A included in the cooling path 26. The electric pump 24 causes the suctioned coolant to flow through the cooling path 26, circulate through the inverter 14, the motor M, and the DC/DC converter 21 in this order, and then return to the radiator 23.

The coolant pumped out from the electric pump 24 passes through a cooling path 26B included in the cooling path 26 and flows through the inverter 14. For example, the cooling path 26B extends upward on the right side of the electric pump 24 and is connected to a rightward portion of the front portion of the inverter 14.

The coolant that has passed through the inverter 14 flows out from a leftward portion of the rear portion of the inverter 14 to a cooling path 26C included in the cooling path 26. The coolant that has flowed out from the inverter 14 passes through the cooling path 26C and flows through the motor M. The cooling path 26C is connected to an inlet part 28 provided in an upper left portion of the motor M, for example.

The coolant that has passed through the motor M flows out from an outlet part 29 provided in an upper right portion of the motor M to a cooling path 26D included in the cooling path 26. The coolant that has flowed out from the motor M passes through the cooling path 26D and flows through the DC/DC converter 21. For example, the cooling path 26D extends below the inverter 14 on the right side of the inverter 14 and is connected to the DC/DC converter 21.

The coolant that has passed through the DC/DC converter 21 flows to a cooling path 26E included in the cooling path 26 between the DC/DC converter 21 and the radiator 23. Thus, the coolant is caused to flow through the cooling path 26 from the radiator 23 by the electric pump 24 to circulate through the inverter 14, the motor M, and the DC/DC converter 21 in this order and then return to the radiator 23.

As described above, the cooling path 26 is efficiently configured in accordance with the positions of the radiator 23, the electric pump 24, the inverter 14, the motor M, and the DC/DC converter 21.

Here, the inverter 14 generates a three-phase alternating current for controlling the motor M, and therefore, the heat resistance of the inverter 14 is generally lower than the heat resistance of the motor M, and the temperature of the inverter 14 is likely to be higher than the temperature of the DC/DC converter 21. Therefore, the inverter 14 needs to be sufficiently cooled to suppress malfunction due to the influence of heat, and is preferably cooled with preference over the motor M and the DC/DC converter 21.

The motor M generally has higher heat resistance than the inverter 14 but generates more heat than the inverter 14.

The DC/DC converter 21 generates less heat than the inverter 14 and the motor M, and the need to cool the DC/DC converter 21 is lower than the need to cool the inverter 14 and the motor M. Moreover, the DC/DC converter 21 is disposed at a position where the passage of air is facilitated, and therefore, it can be expected that the DC/DC converter 21 is cooled by air.

As described above, the coolant flows through the cooling path 26 from the radiator 23 to the inverter 14, the motor M, and the DC/DC converter 21 in this order, and then returns to the radiator 23.

Accordingly, the coolant flows through the inverter 14 before flowing through the motor M, which generates a large amount of heat. The coolant cools the cooling targets through heat transfer between the coolant and the cooling targets. Therefore, an increase in the temperature of the coolant that has passed through the motor M, which generates a large amount of heat, is larger than an increase in the temperature of the coolant that has passed through the inverter 14, and the cooling ability of the coolant that has passed through the motor M significantly decreases. The coolant flows through the inverter 14, which needs to be cooled preferentially, immediately after being cooled by the radiator 23 and before flowing through the motor M, and therefore, the coolant can effectively cool the inverter 14 by flowing through the inverter 14 while maintaining sufficiently high cooling ability.

Note that the inverter 14 generates less heat than the motor M, and therefore, even after the coolant passes through the inverter 14, the coolant has sufficiently high cooling ability and can sufficiently cool the motor M.

Also, the DC/DC converter 21 generates less heat than the inverter 14 and the motor M, and the cooling ability required for the coolant to cool the DC/DC converter 21 is low, and therefore, even the coolant that has passed through the motor M can cool the DC/DC converter 21 to the extent necessary and sufficient.

With the above-described configuration, the cooling mechanism according to the present embodiment can efficiently cool the inverter 14, the motor M, and the DC/DC converter 21 with use of the coolant flowing through the cooling path 26.

### Motor

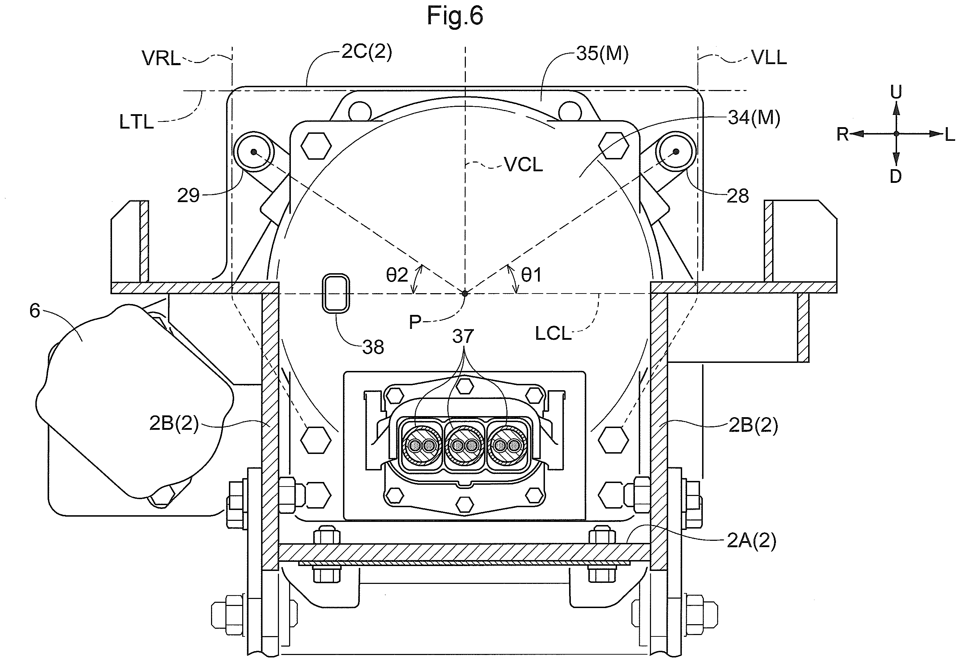

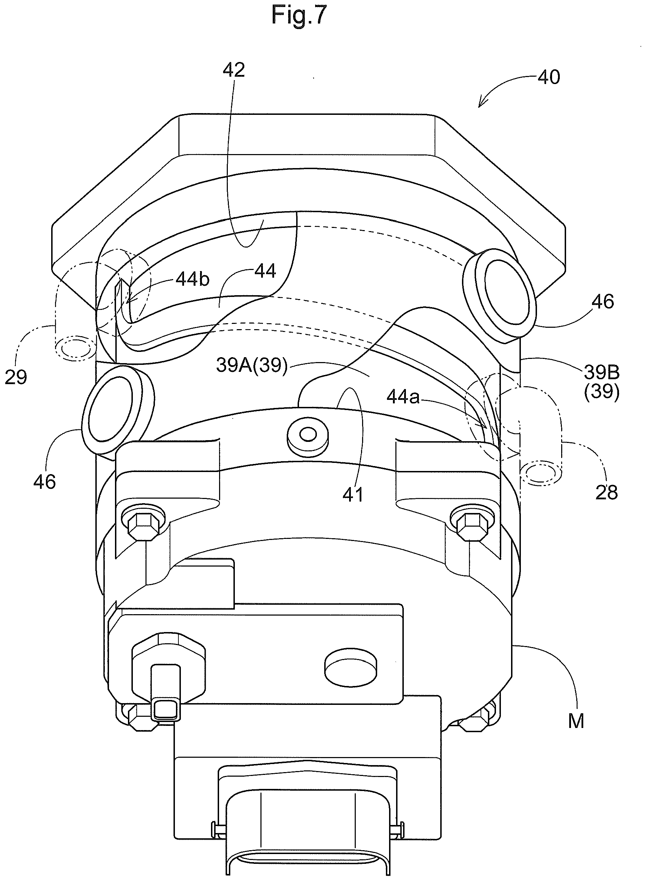

Next, the following describes a structure for cooling the motor M and the arrangement of the structure based on FIGS. 6 and 7 with reference to FIGS. 3 and 5.

As shown in FIG. 6, the body frame 2 includes a plate-shaped bottom plate 2A, a pair of left and right side plates 2B, and a vertical plate 2C. The pair of side plates 2B are plate-shaped members and respectively arranged upright in two end portions of the bottom plate 2A in the left-right direction (width direction) of the body. The vertical plate 2C is a plate-shaped member and extends orthogonal to the bottom plate 2A and the pair of side plates 2B.

The motor M is disposed above the bottom plate 2A and supported in a cantilever manner by a surface of the vertical plate 2C facing the front side of the body. The motor M includes a body 34 and a plate-shaped attachment plate 35 provided at a rear portion of the body 34. The attachment plate 35 of the motor M is supported by the surface of the vertical plate 2C facing the front side of the body. The body 34 of the motor M is disposed between the pair of side plates 2B. Note that a hydraulic pump 6 is supported by the surface of the vertical plate 2C facing the front side of the body, next to the motor M in the left-right direction with one of the side plates 2B arranged between the hydraulic pump 6 and the motor M. The hydraulic pump 6 is driven by the motor M and supplies hydraulic oil to a hydraulic device.

A front surface of the motor M includes three-phase power supply terminals 37 to which the three-phase alternating current (three-phase current) is input. Also, the front surface of the motor M includes a signal terminal 38 for inputting and outputting various signals.

As shown in FIGS. 6 and 7, the motor M includes a stator (not shown) and a rotor (not shown) inside the body 34. The stator is disposed along the inner side of a circumferential wall 39 of the body 34 to surround the rotor. The rotor of the motor M rotates about a rotation axis P when the three-phase alternating current is input to the stator. As a result of the rotor rotating, driving force is transmitted to the hydraulic continuously variable transmission 15.

As shown in FIG. 7, the motor M includes a spiral motor coolant path 40 extending along the circumferential wall 39 of the body 34. The circumferential wall 39 has a double wall structure and is constituted by an inner circumferential wall 39A and an outer circumferential wall 39B (partially omitted in FIG. 7 to illustrate an internal structure), and the motor coolant path 40 is formed between the inner circumferential wall 39A and the outer circumferential wall 39B.

A recess is formed in the circumferential wall 39 of the motor M, and the inner circumferential wall 39A corresponds to a bottom surface of the recess. The motor coolant path 40 is a region surrounded by a front end face 41 of the recess, a rear end face 42 of the recess, the inner circumferential wall 39A, and the outer circumferential wall 39B.

A partition wall 44 is provided in the motor coolant path 40. The partition wall 44 extends diagonally relative to the circumferential direction of the circumferential wall 39 from a position at which the partition wall 44 is in contact with the front end face 41 to a position at which the partition wall 44 is in contact with the rear end face 42. The partition wall 44 has a length that is about 1/4 of the length (circumference) of the circumferential wall 39 in the circumferential direction of the circumferential wall 39. The partition wall 44 extends along the inner circumferential wall 39A and the outer circumferential wall 39B and is in contact with the inner circumferential wall 39A and the outer circumferential wall 39B. Accordingly, the motor coolant path 40 has a spiral shape extending from a start end portion 44a of the partition wall 44, which is in contact with the front end face 41, to a terminal end portion 44b of the partition wall 44, which is in contact with the rear end face 42. The length of the motor coolant path 40 is approximately equal to the sum of the length of the circumferential wall 39 in the circumferential direction and the length of the partition wall 44.

With this configuration, it is possible to efficiently increase the length of the motor coolant path 40 along the circumferential wall 39 of the motor M to efficiently cool the motor M.

The motor coolant path 40 includes the inlet part 28 through which the coolant flowing through the cooling path 26 enters the motor coolant path 40, and the outlet part 29 from which the coolant that has passed through the motor coolant path 40 is discharged to the cooling path 26.

The inlet part 28 is provided in a region adjacent to the outlet part 29 side of the start end portion 44a of the partition wall 44 and extends from the motor coolant path 40 through the outer circumferential wall 39B. The outlet part 29 is provided in a region adjacent to the inlet part 28 side of the terminal end portion 44b of the partition wall 44 and extends from the motor coolant path 40 through the outer circumferential wall 39B. Accordingly, the coolant enters from the inlet part 28, flows through the spiral motor coolant path 40 along the circumferential wall 39, and is discharged from the outlet part 29 to the cooling path 26.

As shown in FIG. 6, the inlet part 28 and the outlet part 29 are above a horizontal center line LCL in a front view. The horizontal center line LCL is a virtual line extending in the left-right direction (width direction) of the body and passing through the rotation axis P, which is the center of the motor M (body 34). It is preferable that the inlet part 28 and the outlet part 29 are provided above upper end portions of the side plates 2B. The inlet part 28 and the outlet part 29 are provided separately on opposite sides of a vertical center line VCL in the left-right direction (width direction). The vertical center line VCL is a virtual line extending in the up-down direction (height direction) of the body and passing through the rotation axis P, which is the center of the motor M (body 34). For example, the inlet part 28 is provided in a left region of the motor M and the outlet part 29 is provided in a right region of the motor M in the front view.

It is particularly preferable that an interior angle θ1 between the horizontal center line LCL and a line segment connecting the center of the opening of the inlet part 28 and the rotation axis P is 30° or more and 55° or less. It is also preferable that an interior angle θ2 between the horizontal center line LCL and a line segment connecting the center of the opening of the outlet part 29 and the rotation axis P is 30° or more and 55° or less.

When the inlet part 28 and the outlet part 29 are arranged as described above, the inlet part 28 and the outlet part 29 can efficiently connect the motor coolant path 40 and the cooling path 26 and can be efficiently arranged in the motor M.

Furthermore, it is preferable that the inlet part 28 is located within a region surrounded by the horizontal center line LCL, the vertical center line VCL, and a vertical left end line VLL (first vertical line) in the front view. The vertical left end line VLL is a virtual line extending in the up-down direction (height direction) of the body and passing through a left end portion of the motor M. Likewise, it is preferable that the outlet part 29 is located within a region surrounded by the horizontal center line LCL, the vertical center line VCL, and a vertical right end line VRL (second vertical line) in the front view. The vertical right end line VRL is a virtual line extending in the up-down direction (height direction) of the body and passing through a right end portion of the motor M.

In this case, the inlet part 28 and the outlet part 29 are located inward of respective edges of the motor M (the body 34 and the attachment plate 35) in the left-right direction and the up-down direction. Accordingly, the motor M including the inlet part 28 and the outlet part 29 is efficiently disposed in the body.

Also, the three-phase power supply terminals 37 are provided below the horizontal center line LCL in the front view. Likewise, the signal terminal 38 is provided near the horizontal center line LCL in the up-down direction.

Accordingly, the three-phase power supply terminals 37 and the signal terminal 38 are spaced apart from the inlet part 28 and the outlet part 29 in the up-down direction of the motor M. Therefore, even if the coolant leaks from the inlet part 28 or the outlet part 29, the coolant can be kept from coming into contact with the three-phase power supply terminals 37 and the signal terminal 38. Consequently, it is possible to suppress the occurrence of problems in the three-phase power supply terminals 37 and the signal terminal 38 caused by the coolant.

Furthermore, it is preferable that the three-phase power supply terminals 37 are disposed in the center region of the body in the left-right direction (width direction), and the signal terminal 38 is eccentric leftward or right from the vertical center line VCL, i.e., eccentric in the left-right direction (width direction) of the body relative to the three-phase power supply terminals 37. For example, the signal terminal 38 is provided in the vicinity of a right end portion of the body 34 of the motor M.

A three-phase alternating current having a high frequency is input at a high voltage to the three-phase power supply terminals 37, and the frequency and the voltage need to be stable in order to control the rotational speed of the motor M. Also, various control signals and detection signals are input to the signal terminal 38 or output from the signal terminal 38.

Therefore, the three-phase power supply terminals 37 are spaced apart from the signal terminal 38 in the up-down direction (height direction) and the left-right direction (width direction) of the body, and consequently, the three-phase power supply terminals 37 and the signal terminal 38 can be kept from being affected by noise from each other, and the motor M can be operated precisely.

A casing portion of the motor M that includes the motor coolant path 40 is produced through casting. The motor coolant path 40 is formed with use of a sand core. Therefore, discharge ports 46 (see FIG. 7) for discharging the sand constituting the core are provided in the motor coolant path 40 of the body 34. The plurality of discharge ports 46 are provided along the motor coolant path 40. The discharge ports 46 are eventually covered.

### Inverter

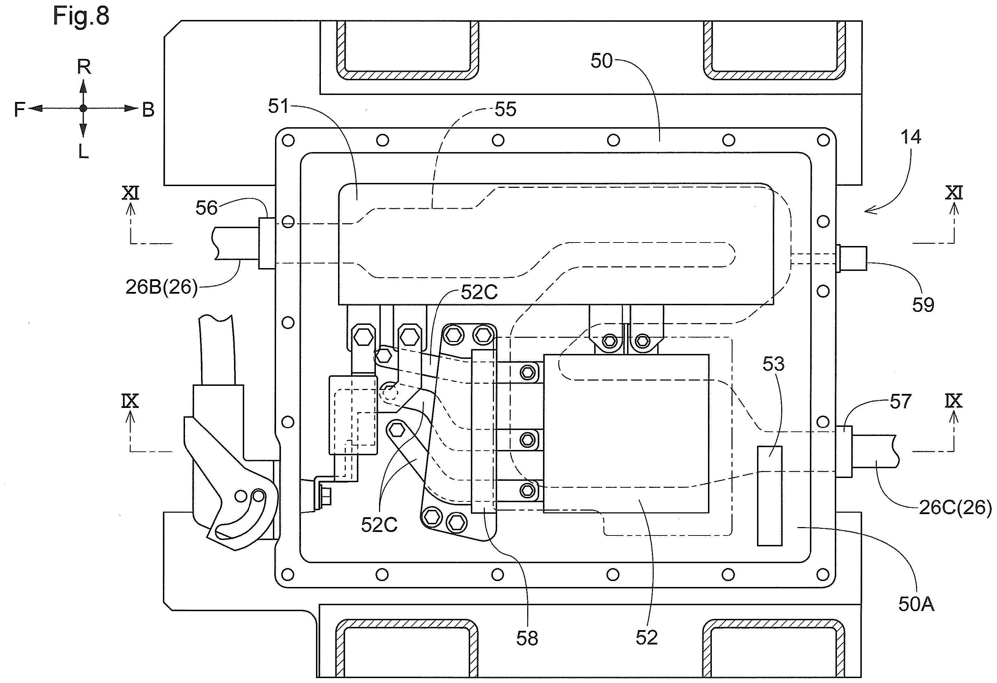

Next, the following describes a configuration including a structure for cooling the inverter 14 based on FIGS. 8 to 11 with reference to FIGS. 3 and 5.

The inverter 14 converts a direct current supplied from the battery 4 for travel to a three-phase alternating current (three-phase current, three-phase power) having a predetermined frequency, and supplies the three-phase alternating current to the motor M.

As shown in FIG. 8, the inverter 14 includes an inverter case 50 and components such as a capacitor 51, an IGBT 52, which is an example of a power transistor, and a resistor 53 provided inside the inverter case 50.

The capacitor 51 smoothes the direct current supplied from the battery 4 for travel. The IGBT 52 converts the direct current smoothed by the capacitor 51 to the three-phase alternating current having the predetermined frequency, and supplies the three-phase alternating current to the motor M. The resistor 53 is provided to consume and discharge power stored in the capacitor 51 after the inverter 14 is stopped.

The inverter case 50 is constituted by outer plates including a mounting plate 50A, and a closed space surrounded by the outer plates is formed inside the inverter case 50. The capacitor 51, the IGBT 52, and the resistor 53 are supported by the mounting plate 50A in the closed space.

The capacitor 51, the IGBT 52, and the resistor 53 generate heat while operating, and may malfunction due to the heat. Therefore, the inverter 14 includes an inverter coolant path 55 for cooling components such as the capacitor 51, the IGBT 52, and the resistor 53 as cooling targets.

The inverter coolant path 55 is formed inside the mounting plate 50A, and the coolant introduced from the cooling path 26 flows through the inverter coolant path 55. The inverter case 50 includes an inlet part 56 and an outlet part 57. The coolant flowing through the cooling path 26 (cooling path 26B) enters the inverter coolant path 55 via the inlet part 56, and the coolant that has passed through the inverter coolant path 55 flows out to the cooling path 26 (cooling path 26C) from the outlet part 57.

The inverter coolant path 55 is formed inside the mounting plate 50A so as to extend along the components that are the cooling targets to cool the components of the inverter 14. In the example shown in FIG. 8, the capacitor 51, the IGBT 52, and the resistor 53 are held on an upper surface of the mounting plate 50A, and accordingly, the inverter coolant path 55 inside the mounting plate 50A is formed under the capacitor 51, the IGBT 52, and the resistor 53.

For example, the inverter coolant path 55 extends from the inlet part 56 through regions respectively extending along the capacitor 51, the IGBT 52, and the resistor 53.

Generally, the capacitor 51 generates less heat than the IGBT 52, but the heat resistance of the capacitor 51 is lower than the heat resistance of the IGBT 52 and the resistor 53. Therefore, the capacitor 51 needs to be cooled preferentially among all components of the inverter 14.

The IGBT 52 generates the high-voltage alternating current (three-phase alternating current), and accordingly generates more heat than the capacitor 51 and the resistor 53, but can resist a higher temperature than the capacitor 51, and it is highly likely that the capacitor 51 will malfunction earlier than the IGBT 52. Also, the possibility of the malfunction of the resistor 53 due to heat is lower than the possibilities of the malfunction of the capacitor 51 and the IGBT 52, and accordingly, the need to cool the resistor 53 is lower than the need to cool the capacitor 51 and the IGBT 52.

As described above, the coolant cools the capacitor 51, the IGBT 52, and the resistor 53 in this order, and therefore, the capacitor 51 is cooled preferentially and efficiently. If the capacitor 51 is cooled later than the IGBT 52, it is difficult to sufficiently cool the capacitor 51 because the temperature of the coolant significantly increases when the coolant cools the IGBT 52. To the contrary, it is possible to sufficiently cool the IGBT 52 even with the coolant that has cooled the capacitor 51 and has an increased temperature, because the IGBT 52 generates a large amount of heat and therefore has a higher temperature than the coolant, and the IGBT 52 has higher heat resistance than the capacitor 51. Also, the need to cool the resistor 53 is lower than the need to cool the capacitor 51 and the IGBT 52.

For the reasons described above, the inverter coolant path 55 is formed in such a manner that the capacitor 51, the IGBT 52, and the resistor 53 are cooled in this order, and with this configuration, it is possible to efficiently cool the capacitor 51, the IGBT 52, and the resistor 53 in accordance with their characteristics.

For example, the inverter coolant path 55 extends along the capacitor 51 from the inlet part 56 toward the rear of the body, makes a U-turn near a rear end portion of the capacitor 51, and then extends along the capacitor 51 toward the front of the body. The inverter coolant path 55 again makes a U-turn in front of the IGBT 52, and then extends along the IGBT 52 toward the rear of the body while increasing its width (width in the left-right direction of the body). Then, the inverter coolant path 55 passes through the resistor 53 toward the rear of the body while narrowing its width and reaches the outlet part 57.

With this configuration, it is possible to efficiently cool the capacitor 51, the IGBT 52, and the resistor 53 with the coolant flowing through the inverter coolant path 55.

### IGBT Cooling Structure

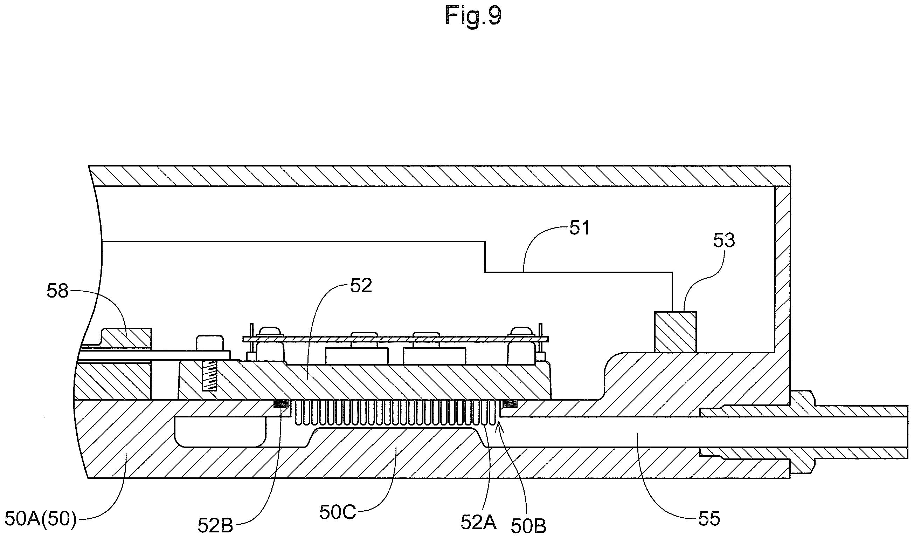

As shown in FIG. 9, the IGBT 52 includes a heat sink. The heat sink may be fins or the like, and may also be pin fins 52A formed in a matrix on a surface of the IGBT 52.

The mounting plate 50Aincludes a through hole 50B in a region where the IGBT 52 is disposed. The through hole 50B extends from the closed space inside the inverter case 50 to the inverter coolant path 55. The IGBT 52 is supported by the mounting plate 50A in such a manner that the pin fins 52A are located in the through hole 50B. The pin fins 52A extend through the through hole 50B and reach the inverter coolant path 55.

In this configuration, the pin fins 52A directly come into contact with the coolant flowing through the inverter coolant path 55, and therefore, it is possible to efficiently cool the IGBT 52 via the pin fins 52A.

It is preferable that the inner diameter of the inverter coolant path 55 is smaller at the position where the pin fins 52A protrude in the inverter coolant path 55. For example, a portion of the mounting plate 50A facing the pin fins 52Aincludes a protruding portion 50C protruding toward the inside of the inverter coolant path 55 at the position where the pin fins 52A protrude in the inverter coolant path 55.

Due to the inner diameter of the inverter coolant path 55 being smaller at the position where the pin fins 52Aprotrude in the inverter coolant path 55, the flow rate of the coolant increases when the coolant passes through the position, and the coolant can efficiently cool the IGBT 52 via the pin fins 52A. Also, the coolant precisely comes into contact with the pin fins 52A, and the IGBT 52 can be cooled precisely via the pin fins 52A.

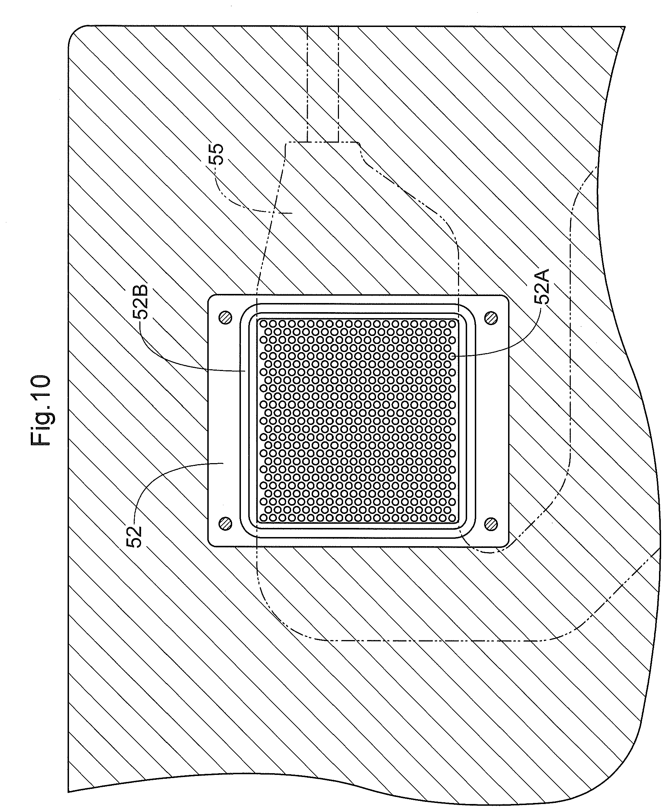

As shown in FIGS. 9 and 10, it is preferable that the inverter 14 includes an O-ring 52B filling a gap between the IGBT 52 and the mounting plate 50A around the through hole 50B. For example, the O-ring 52B is disposed so as to come into close contact with an outer peripheral portion of the IGBT 52 and an inner peripheral portion of the through hole 50B.

With this configuration, it is possible to prevent the coolant flowing through the inverter coolant path 55 from entering the closed space inside the inverter 14 via the through hole 50B. Consequently, it is possible to suppress malfunction of the various components of the inverter 14 due to the coolant.

### Capacitor Cooling Structure

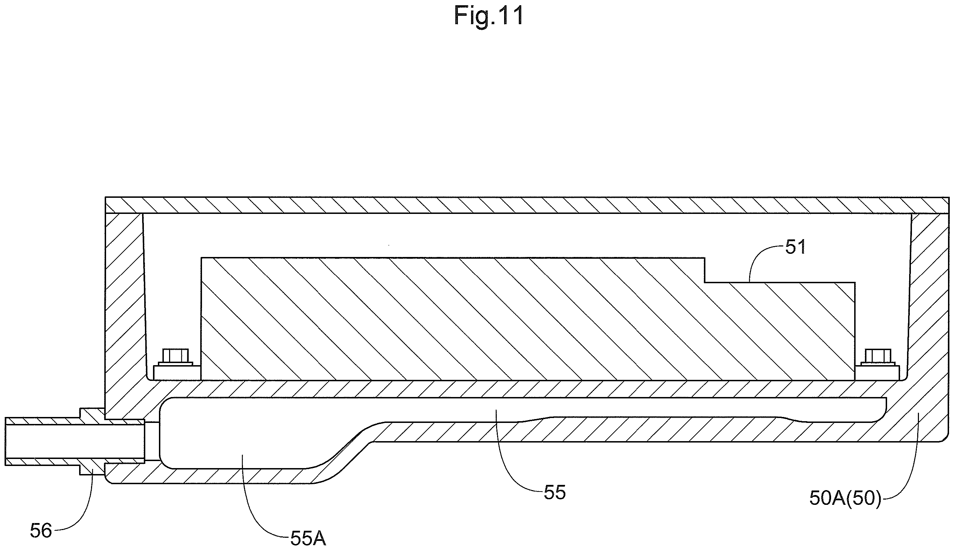

As shown in FIG. 11, the capacitor 51 is supported on the surface of the mounting plate 50Ain the closed space. On a bottom surface of the capacitor 51, at least a region thereof extending along the inverter coolant path 55 is smooth and flat. At least a region of the mounting plate 50A on which the capacitor 51 is mounted is smooth and flat. Therefore, at least the region of the capacitor 51 extending along the inverter coolant path 55 comes into surface contact with the mounting plate 50A and is held in close contact therewith.

Since the capacitor 51 is in close surface contact with the mounting plate 50A, the coolant flowing through the inverter coolant path 55 can efficiently exchange heat with the capacitor 51 via the mounting plate 50A and efficiently cool the capacitor 51.

Also, a coolant storing section 55Ais provided near the inlet part 56 of the inverter coolant path 55. The coolant storing section 55A extends from the inlet part 56 to the inlet part 56 side end region of the portion of the inverter coolant path 55 extending along the capacitor 51, for example.

The coolant storing section 55A has a larger path diameter, which is the area of a cross section of the coolant path taken along the vertical direction, than the remaining portion of the inverter coolant path 55, and is configured to be capable of storing the coolant. With this configuration, it is possible to store the coolant in the inverter coolant path 55 and sufficiently supply the coolant to the inverter coolant path 55, and therefore, it is possible to efficiently cool the components of the inverter 14 that are the cooling targets.

### Other Structures

As shown in FIG. 8, the inverter 14 includes a water temperature sensor 59 (temperature sensor) for measuring the temperature of the coolant, e.g., the temperature of cooling water, flowing through the inverter coolant path 55. The water temperature sensor 59 is provided between the region for cooling the capacitor 51 and the region for cooling the IGBT 52 in the inverter coolant path 55, for example. More specifically, the water temperature sensor 59 is provided on the portion of the inverter coolant path 55 making a U-turn in the region for cooling the capacitor 51, for example.

The need to cool the capacitor 51 is high, and if the temperature of the coolant that has cooled the capacitor 51 or is cooling the capacitor 51 is higher than or equal to a predetermined temperature, it can be determined that the capacitor 51 is not sufficiently cooled. Also, if the temperature of the coolant cooling the IGBT 52 is higher than or equal to another predetermined temperature, it can be determined that the IGBT 52 cannot be cooled sufficiently. Also, it is possible to check the state of operation of the inverter 14 based on the measured water temperature (temperature of the coolant).

Therefore, the temperature of the cooling water (coolant) is measured by the water temperature sensor 59, and the flow rate of the coolant flowing through the inverter coolant path 55 or the operation of the inverter 14 can be controlled in accordance with the water temperature. For example, if the water temperature (temperature of the coolant) measured by the water temperature sensor 59 is higher than or equal to the predetermined temperature, it is possible to control the electric pump 24 to increase the flow rate of the coolant or stop the inverter 14. Also, if the water temperature (temperature of the coolant) measured by the water temperature sensor 59 is about the room temperature, it is possible to determine that the inverter 14 is not operating and perform control so as to stop at least the flow of the coolant through the inverter 14 (inverter coolant path 55). With this configuration, it is possible to cool the inverter 14 efficiently and precisely.

Also, the inverter 14 includes a current sensor 58 for measuring the current value of the three-phase alternating current generated by the IGBT 52. The current sensor 58 is supported by three-phase AC wires 52C in front of the IGBT 52. The IGBT 52 generates the predetermined three-phase alternating current while referring to the current value measured by the current sensor 58.

The current sensor 58 may be disposed in such a manner as to have a region overlapping the inverter coolant path 55 in a plan view, but may also be spaced apart from the inverter coolant path 55. The current sensor 58 generates less heat than the IGBT 52 and has lower heat resistance than the capacitor 51. Therefore, the current sensor 58 does not necessarily need to be disposed along the inverter coolant path 55 and is sufficiently cooled through heat transfer with the coolant via the inverter case 50.

### Other Embodiments

(1) The heat resistance of the inverter 14 is not necessarily low. Likewise, the motor M does not necessarily generate a large amount of heat. Therefore, there is no limitation to the configuration in the above embodiment in which the cooling path 26 is configured in such a manner that the coolant flows through the inverter 14, the motor M, and the DC/DC converter 21 in this order. The coolant may also be caused to flow through the inverter 14, the motor M, and the DC/DC converter 21 in a suitable order in accordance with the heat generation amount and the heat resistance of these devices.

In this manner, it is possible to efficiently configure the cooling mechanism in accordance with the characteristics of the cooling targets.

For example, the motor M may be cooled in a region downstream of the other cooling targets in the cooling path 26. Specifically, the motor M may be provided downstream of the other cooling targets in the cooling path 26. Since the motor M generates a large amount of heat during operation, the temperature of the coolant rises significantly after cooling the motor M, and the cooling performance of the coolant falls significantly. Also, the motor M has relatively high heat resistance. Therefore, by cooling the motor M in a region downstream of the other cooling targets in the cooling path 26, the other cooling targets can be cooled effectively.

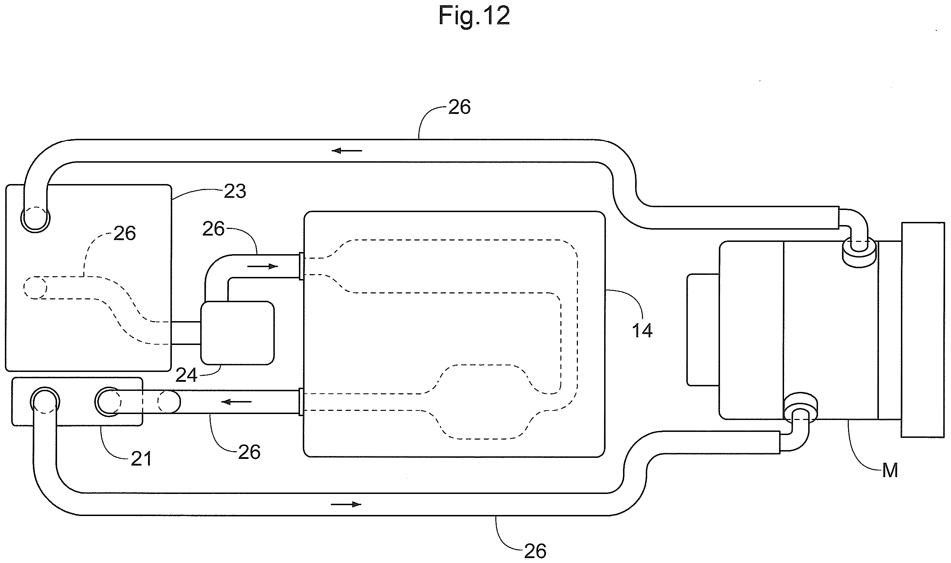

Specifically, as shown in FIG. 12, the cooling path 26 is formed so as to extend from the radiator 23, pass through the electric pump 24, the inverter 14, the DC/DC converter 21, and the motor M in this order, and then return to the radiator 23. In other words, the coolant flowing through the cooling path 26 circulates from the radiator 23 through the electric pump 24, the inverter 14, the DC/DC converter 21, and the motor M in this order, and then returns to the radiator 23. In this case, the cooling path 26 is arranged in accordance with the arrangement of the radiator 23, the electric pump 24, the inverter 14, the DC/DC converter 21, the motor M, and the like.

Note that the amount of heat generated by the DC/DC converter 21 is small, and therefore the temperature of the coolant does not rise significantly even after cooling the DC/DC converter 21. Therefore, the cooling path 26 may be formed so as to extend from the radiator 23, pass through the electric pump 24, the DC/DC converter 21, the inverter 14, and the motor M in this order, and then return to the radiator 23.

(2) In each of the above embodiments, the cooling mechanism (cooling path 26) may also be configured to cool at least one of the inverter 14, the motor M, and the DC/DC converter 21. For example, a configuration is also possible in which the cooling path 26 does not pass through the DC/DC converter 21. In this case, the coolant that has flowed out from the motor M is directly returned to the radiator 23 through the cooling path 26 without passing through the DC/DC converter 21.

To the contrary, the cooling mechanism (cooling path 26) may also be configured to cool another cooling target in addition to at least one of the inverter 14, the motor M, and the DC/DC converter 21.

As described above, it is possible to increase the freedom in the configuration of the cooling mechanism (cooling path 26) and cool various cooling targets with the cooling mechanism. For example, a battery and a charger may also be disposed midway on the cooling path 26 and cooled by the cooling mechanism.

(3) In each of the above embodiments, there is no limitation to the above-described arrangement of the radiator 23, the cooling path 26, the electric pump 24, the inverter 14, the motor M, and the DC/DC converter 21, and suitable arrangement may be adopted. By optimizing the arrangement in accordance with the characteristics and operation conditions of the cooling targets, it is possible to efficiently cool the cooling targets.

For example, the DC/DC converter 21 is not limited to being arranged next to the radiator 23 in the left-right direction on the right side of the radiator 23, and instead may be arranged next to the radiator 23 in the left-right direction on the left side of the radiator 23, as shown in FIG. 12. Furthermore, the DC/DC converter 21 may be provided behind the radiator 23. In this case, it is difficult for air to flow through the DC/DC converter 21, and cooling by air cannot be expected, and therefore it is preferable that the coolant flows through the DC/DC converter 21 for cooling thereof before flowing through the motor M.

(4) In each of the above embodiments, the motor coolant path 40 may also be a spiral path that winds around the circumferential wall 39 a suitable number of times. The length of the motor coolant path 40, which is proportional to the number of turns of the spiral, is determined by the number of times the partition wall 44 winds around the circumferential wall 39.

In this case, it is possible to easily form the motor coolant path 40 having an appropriate length in accordance with the characteristics of the motor M and efficiently cool the motor M.

(5) In each of the above embodiments, the three-phase power supply terminals 37 and the signal terminal 38 may be arranged at suitable positions. This makes it possible to increase the freedom in optimizing the structure of the motor M.

(6) In each of the above embodiments, a component other than the capacitor 51, the IGBT 52, the resistor 53, and the current sensor 58 may also be mounted as a cooling target in the inverter 14. To the contrary, a configuration is also possible in which the capacitor 51, the IGBT 52, the resistor 53, or the current sensor 58 is not mounted in the inverter 14.

In this case, the components that need to be cooled can be cooled by efficiently cooling an area of the inverter 14 that needs to be cooled in accordance with the configuration of the inverter 14.

(7) In each of the above embodiments, the electric work vehicle may include a suitable travel device such as a crawler instead of the front wheels 10 and the rear wheels 11.

(8) In each of the above embodiments, the present invention is applicable to not only an electric tractor but also an electric agricultural work vehicle such as an electric combine or an electric rice planter and electric work vehicles that perform various works.

### Industrial Applicability

The present invention is applicable to an electric work vehicle that performs various types of work such as agricultural work.

### Description of Reference Signs

4: battery for travel
10: front wheel (travel device)
11: rear wheel (travel device)
14: inverter
21: DC/DC converter
23: radiator
26: cooling path
M: motor

## Claims

1. An electric work vehicle comprising:
a body;
a travel device on the body;
a motor configured to drive the travel device;
a radiator configured to cool a coolant; and
a cooling path through which the coolant cooled by the radiator circulates through a plurality of cooling targets including the motor and returns to the radiator,
the motor being cooled in a region downstream of each other cooling target in the cooling path.

2. The electric work vehicle according to claim 1, further comprising:
an inverter configured to supply electric power to the motor; and
a DC/DC converter configured to convert a voltage of electric power to be supplied to an electric component,
wherein the inverter and the DC/DC converter are included in the plurality of cooling targets.

3. The electric work vehicle according to claim 2,
wherein the cooling path extends from the radiator, passes through the inverter, the DC/DC converter, and the motor in this order, and returns to the radiator.

4. The electric work vehicle according to claim 3,
wherein the radiator, the inverter, and the motor are arranged in this order in a front-rear direction of the body from a front side corresponding to a forward travel direction of the body.

5. The electric work vehicle according to claim 4, further comprising:
a battery for travel configured to store electric power to be supplied to the motor via the inverter,
wherein the inverter is under the battery for travel, and
the inverter overlaps the battery for travel in a plan view.
